# EUROPEAN PATENT APPLICATION

(11) **EP 2 740 964 A2**
(43) Date of publication of application: **11.06.2014**
(21) Application number: 13195812.6
(22) Date of filing: 05.12.2013
(51) Int. Cl.: F16F 9/36, B62K 25/08, F16J 9/08, F16F 9/02

(54) **Air shock absorber and straddle-type vehicle**

(30) Priority: 10.12.2012 JP 2012269461
(71) Applicant: Yamaha Hatsudoki Kabushiki Kaisha, Iwata-shi, Shizuoka 438-8501 (JP)
(72) Inventor: Kamioka, Takamasa, Shizuoka, 4437-0223 (JP); Kamiya, Noboru, Shizuoka, 437-0223 (JP)
(74) Representative: Stöckeler, Ferdinand

(57) **Abstract**

An air shock absorber where the sealing performance and slidability of the seal members may be maintained is provided. The air shock absorber includes a cylinder and a piston (101). The cylinder contains gases and is divided by the piston (101) into a high pressure gas chamber and a low pressure gas chamber. A seal member (120) extends in a circumferential direction of the piston (101) along its outer periphery. Another seal member (110) is located on the outer periphery of the piston (101) closer to the high pressure gas chamber than the seal member (120) is. A surface (120S) of the seal member (120) has a groove (120G). An surface (110S) of the seal member (110) faces the surface (120S) and has a groove (110G).

## Description

### BACKGROUND

### Technical Field

The present invention relates to air shock absorbers and straddle-type vehicles.

### Description of the Background Art

An air shock absorber may be used as the front suspension or rear suspension of a straddle-type vehicle. The air shock absorber includes a cylinder for containing gases such as air, and uses a piston to compress the gases in the cylinder to generate reactive forces.

JP 2007-139179 A discloses a shock absorber including an annular piston seal attached to the outer periphery of the piston. The piston seal contacts the inner periphery of the cylinder. The piston seal hermetically seals air in the area in the cylinder that is defined by the piston and piston seal.

JP 2007-139179 A also discloses an air shock absorber including two piston rings (see FIG. 7 of JP 2007-139179 A). The two piston rings are separated from each other in an axial direction of the piston.

### SUMMARY OF THE INVENTION

The inventors recognized that an annular seal member, such as a piston ring, slides in an axial direction of the cylinder while being in contact with the inner side of the cylinder. Accordingly, the seal member should provide not only a sufficient sealing performance for gases, but also a sufficient slidability (slipperiness). Typically, a lubricant such as grease is applied to the periphery of the piston ring. The lubricant increases the slidability of the seal member.

However, in the air shock absorber disclosed in JP 2007-139179 A, as the piston slides, the lubricant may be leaked from the vicinity of the seal member. This decreases the slidability of the seal member. Further, if there is insufficient lubricant, the seal member may wear out, decreasing the sealing performance of the seal member.

An object of the present invention is to provide an air shock absorber where the sealing performance and slidability of the seal members may be maintained.

The air shock absorber according to the present embodiment includes a cylinder, a piston, low pressure and high pressure gas chambers, and a piston rod. The cylinder contains a gas. The piston is contained in the cylinder and includes a front face and a back face. The low pressure gas chamber is located in the cylinder adjacent the back face of the piston. The high pressure gas chamber is located in the cylinder adjacent the front face of the piston, and has a pressure higher than that in the low pressure gas chamber. The piston rod is connected with the back face of the piston and extends into the low pressure gas chamber. The piston includes first and second seal members. The first seal member extends in a circumferential direction of the piston along its outer periphery, is in contact with the inner periphery of the cylinder, and is annular in shape. The second seal member is located on the outer periphery of the piston closer to the front face of the piston than the first seal member is, extends in a circumferential direction of the piston along its outer periphery, is in contact with the inner periphery of the cylinder, and is annular in shape. The first seal member has a first surface including a groove extending in a circumferential direction of the first seal member. The second seal member has a second surface facing the first surface and including a groove extending in a circumferential direction of the second seal member.

In the air shock absorber according to the present embodiment, the sealing performance and slidability of the seal members may be maintained.

### BRIEF DESCRIPTION OF THE DRAWINGS

[FIG. 1] FIG. 1 is a left side view of a straddle-type vehicle according to a first embodiment.
[FIG. 2] FIG. 2 is an exploded perspective view of the front fork of FIG. 1.
[FIG. 3] FIG. 3 is a vertical cross-sectional view of the air shock absorber of FIG. 2.
[FIG. 4] FIG. 4 is a vertical cross-sectional view of the piston of FIG. 3.
[FIG. 5A] FIG. 5A illustrates a frictional force acting on a seal member when the piston slides upward with respect to the cylinder.
[FIG. 5B] FIG. 5B illustrates a frictional force acting on a seal member when the piston slides downward with respect to the cylinder.
[FIG. 6] FIG. 6 is a vertical cross-sectional view of another piston with grooves on the two seal members on its outer periphery, where the grooves face in different directions.
[FIG. 7] FIG. 7 is a vertical cross-sectional view of a piston of a straddle-type vehicle according to a second embodiment.
[FIG. 8] FIG. 8 is a vertical cross-sectional view of an air shock absorber including the piston of FIG. 7.

### DESCRIPTION OF THE EMBODIMENTS

Now, embodiments of the present invention will be described in detail with reference to the drawings. The same or corresponding components in the drawings are labeled with the same characters, and their description will not be repeated.

The air shock absorber according to the present embodiment includes a cylinder, a piston, low pressure and high pressure gas chambers, and a piston rod.

The cylinder contains a gas. The piston is contained in the cylinder and includes a front face and a back face. The low pressure gas chamber is located in the cylinder adjacent the back face of the piston. The high pressure gas chamber is located in the cylinder adjacent the front face of the piston, and has a pressure higher than that in the low pressure gas chamber. The piston rod is connected with the back face of the piston and extends into the low pressure gas chamber. The piston includes first and second seal members. The first seal member extends in a circumferential direction of the piston along its outer periphery, is in contact with the inner periphery of the cylinder, and is annular in shape. The second seal member is located on the outer periphery of the piston closer to the front face of the piston than the first seal member is, extends in a circumferential direction of the piston along its outer periphery, is in contact with the inner periphery of the cylinder, and is annular in shape. The first seal member has a first surface including a groove extending in a circumferential direction of the first seal member. The second seal member has a second surface facing the first surface and including a groove extending in a circumferential direction of the second seal member.

In the air shock absorber according to the present embodiment, the first surface, with a groove, of the first seal member faces the second surface, with a groove, of the second seal member. Thus, when a lubricant is applied between the first and second seal members, the lubricant may be kept between the first and second seal members. Thus, the slidability of the first and second seal members may be maintained. Since the slidability may be maintained, the first and second seal members may be prevented from wearing out. Thus, the sealing performance of the first and second seal members may be maintained.

Preferably, the piston further includes a third seal member. The third seal member is located on the outer periphery of the piston closer to the high pressure gas chamber than the first seal member is, extends in a circumferential direction of the piston, is in contact with the inner periphery of the cylinder, and is annular in shape.

In this case, the third seal member hermetically seals the high pressure gas chamber. As a result, only a pressure lower than that in the high pressure gas chamber acts on the first seal member. This will improve the durability of the first seal member.

Preferably, the third seal member is located on the outer periphery closer to the high pressure gas chamber than the second seal member is.

In this case, the gas pressure in the area where the first and second seal members are located is lower than that in the high pressure gas chamber. Thus, a reduced pressure acts on the first and second seal members, improving the durability of the first and second seal members.

Preferably, the piston further includes a through-hole. The through-hole extends from the front face to an area of the outer periphery that is located between the first and second seal members.

In this case, the lubricant may be supplied to the area between the first and second seal members via the through-hole.

Preferably, the through-hole includes a first hole section and a second hole section. The first hole section includes an opening in the front face of the piston. The second hole section has a cross-section profile smaller than that of the first hole section.

In this case, the cross-section profile of the second hole section is smaller than that of the first hole section. This will allow static pressure near the front face of the piston to be properly conveyed, while preventing dynamic pressure from being transmitted to the area of the outer periphery between the first and second seal members. Thus, this area of the outer periphery is less likely to be affected by dynamic fluctuations in pressure.

A straddle-type vehicle according to the present embodiment includes the above air shock absorber. Now, the straddle-type vehicle of the present embodiment will be described in detail. In the description below, front/forward and rear(ward), left and right, up(ward) and down(ward) mean directions as perceived by the rider riding the straddle-type vehicle.

### [First Embodiment]

### [Straddle-Type Vehicle]

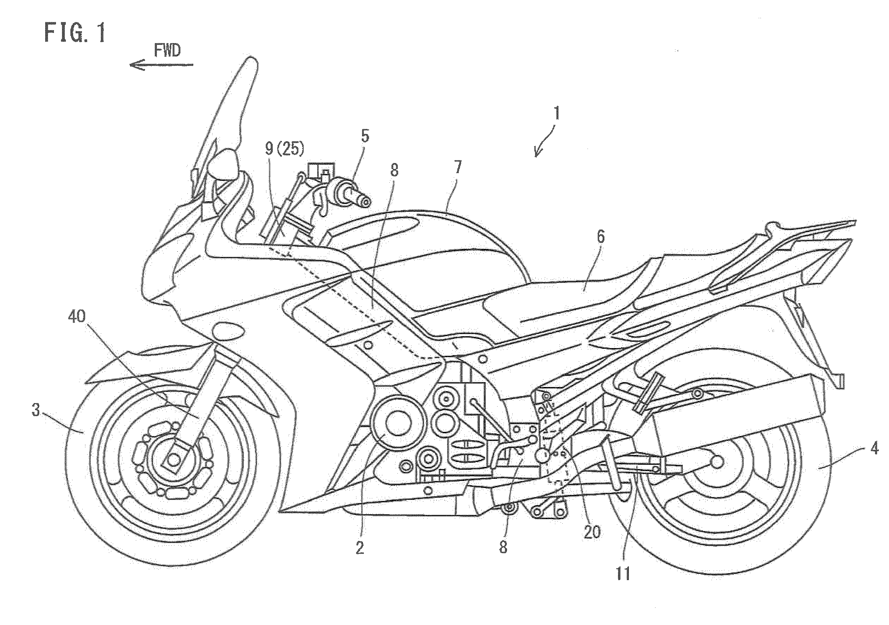

FIG. 1 is a left side view of a straddle-type vehicle 1 according to the present embodiment. In the present embodiment, the straddle-type vehicle 1 is a motorcycle. However, the present embodiment is not limited to motorcycles. The straddle-type vehicle may be, for example, a motocrosser, scooter, moped, all-terrain vehicle, snowmobile, or bicycle.

The straddle-type vehicle 1 includes an engine 2, a front wheel 3, a rear wheel 4, handlebars 5, a seat 6, a fuel tank 7, a body frame 8, and rear arms 11.

The body frame 8 is provided with a head pipe 9 on its front end. The body frame 8 extends from the head pipe 9 obliquely downwardly toward the rear. The head pipe 9 is located forward of the fuel tank 7. The engine 2 is located in a lower area of the body frame 8. The fuel tank 7 is located above the body frame 8. The seat 6 is located above the body frame 8 and rearward of the fuel tank 7.

A pivot shaft, not shown, is provided on the rear of the body frame 8. The rear arms 11 are supported by the pivot shaft at their front ends, the rear arms being swingable up and down on the pivot shaft. The rear wheel 4 is rotatably attached to the rear ends of the rear arms 11.

A rear suspension 20 is located between the body frame 8 and rear wheel 4. For example, the top end of the rear suspension 20 is coupled with the rear end of the body frame 8, while the bottom end of the rear suspension 20 is coupled with the rear arms 11.

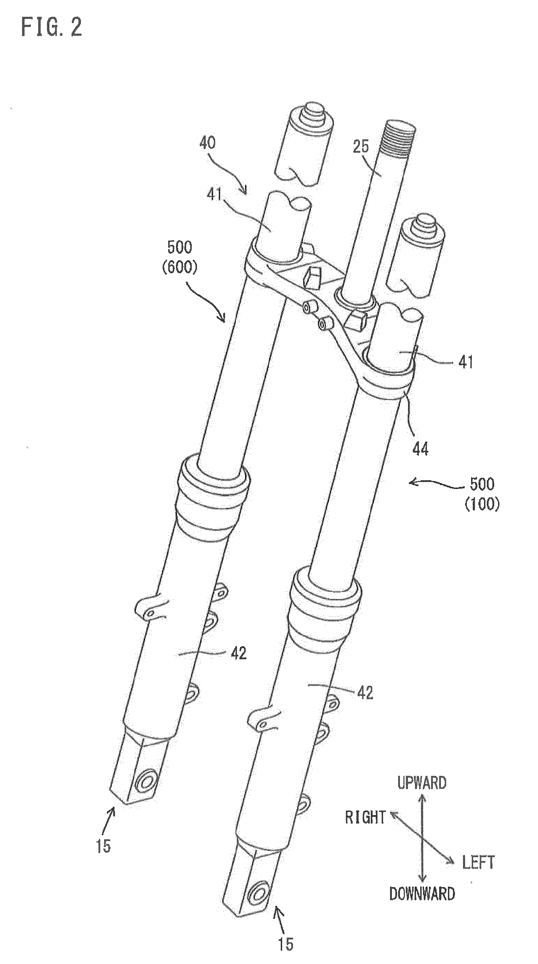

The straddle-type vehicle 1 further includes a front fork 40. As shown in FIG. 2, a steering shaft 25 is fixed to the top of the front fork 40. Returning to FIG. 1, the steering shaft 25 is located inside the head pipe 9. The handlebars 5 are attached to the top of the steering shaft 25. The front wheel 3 is rotatably attached to the bottom ends of the front fork 40.

### [Front Fork 40]

FIG. 2 is a perspective view of the front fork 40. Referring to FIG. 2, the front fork 40 includes a pair of air shock absorbers 500. The air shock absorbers 500 are located to the left and right to sandwich the front wheel 3 (see FIG. 1).

One of the air shock absorbers 500 includes an air springing mechanism, while the other one includes a damping mechanism. In other words, the air shock absorbers 500 have different configurations. The air springing mechanism buffers impacts received by the straddle-type vehicle 1 from the road surface. The damping mechanism suppresses the stretching vibration of the springing mechanism.

"Air shock absorber 100" as used hereinafter is defined as the air shock absorber with an air springing mechanism, while "air shock absorber 600" is defined as the air shock absorber with a damping mechanism.

In FIG. 2, the air shock absorber 100 is located to the left, while the air shock absorber 600 is located to the right. Alternatively, the air shock absorber 100 may be located to the right, while the air shock absorber 600 may be located to the left.

Each of the air shock absorbers 100 and 600 includes a cylinder 41 that works as an inner tube, and an outer tube 42. Each cylinder 41 is located at the upper section of the respective air shock absorber 100 or 600. The cylinders 41 are cylindrical in shape. The cylinders 41 are arranged to the left and right to sandwich the steering shaft 25. In other words, the steering shaft 25 is located between the two cylinders 41. Although not shown, the steering shaft 25 is rotatable in the head pipe 9.

The cylinders 41 and steering shaft 25 are attached to an upper bracket, not shown, and an under bracket 44. More specifically, the top ends of the cylinders 41 and steering shaft 25 are attached to the upper bracket. Middle sections of the cylinders 41 and the bottom end of the steering shaft 25 are attached to the under bracket 44.

An axle bracket 15 is located on the bottom end of each of the air shock absorbers 100 and 600.

Each outer tube 42 is located at the lower section of the respective air shock absorber 100 or 600. The outer tubes 42 are cylindrical in shape. Each outer tube 42 has an inner diameter larger than the outer diameter of the associated cylinder 41. A bottom end of each cylinder 41 is inserted into the associated outer tube 42 through the top portion of this outer tube 42.

### [Air Shock Absorber 100]

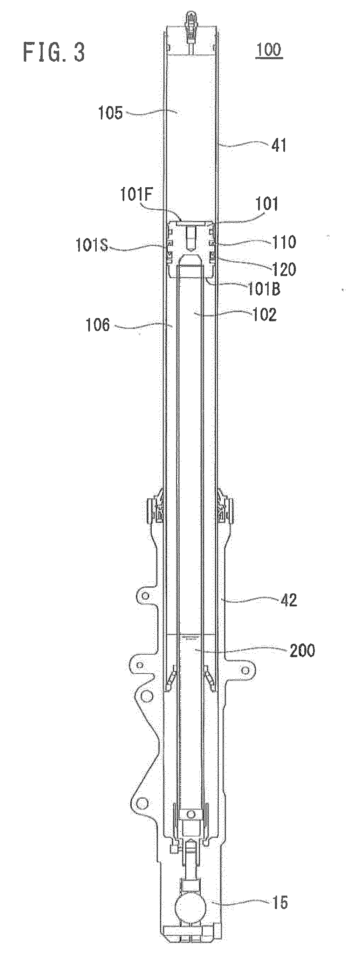

FIG. 3 is a vertical cross-sectional view of the air shock absorber 100 with an air springing mechanism. Referring to FIG. 3, the air shock absorber 100 includes the cylinder 41, a piston 101, and a piston rod 102.

The cylinder 41 is cylindrical in shape and accommodates a gas and the piston 101. In the present embodiment, the gas is air. Alternatively, the gas is not limited to air and may be implemented by other gases.

The piston 101 is columnar in shape and includes a front face 101F and a back face 101B. The piston 101 may move (or slide) in an axial direction of the cylinder 41. The piston 101 has an outer periphery 101S that includes a plurality of annular seal members, 110 and 120. The seal members 110 and 120 are in contact with the inner surface of the cylinder 41 and prevent gases from leaking through the gap between the piston 101 and cylinder 41.

The cylinder 41 includes a high pressure gas chamber 105 and low pressure gas chamber 106. The high pressure gas chamber 105 is located adjacent the front face 101F of the piston 101. The low pressure gas chamber 106 is located adjacent the back face 101B of the piston 101. In short, the interior of the cylinder 41 is divided by the piston 101 into the high pressure gas chamber 105 and low pressure gas chamber 106. The pressure in the high pressure gas chamber 105 is higher than that in the low pressure gas chamber 106. The pressure in the high pressure gas chamber 105 is adjustable.

The piston rod 102 extends in an axial direction of the cylinder 41 and outer tube 42. The top end of the piston rod 102 is connected with the back face 101B of the piston 101, while the bottom end of the piston rod 102 is connected with the bottom of the outer tube 42. In other words, the piston rod 102 is located in the low pressure gas chamber 106.

Lubricant 200 is accumulated at the bottom end of the cylinder 41 and in the outer tube 42. The lubricant may be liquid oil, for example. The lubricant 200 increases the lubricity between the cylinder 41 and outer tube 42. The lubricant 200 may also rise up along the inner surface of the cylinder 41 to increase the lubricity between the cylinder 41 and piston 101.

When the rider riding the straddle-type vehicle 1 actuates the brakes, a load acts on front portions of the straddle-type vehicle 1. At this moment, the cylinder 41 slides downward, causing the piston 101 to be pushed upward into the cylinder 41. As a result, the high pressure gas chamber 105 contracts rapidly, and the low pressure gas chamber 106 contracts slowly. As the high pressure gas chamber 105 and low pressure gas chamber 106 contract, the reactive force by the air shock absorber 100 increases. Thus, the air shock absorber 100 has buffering effects.

As discussed above, the piston 101 may slide in an axial direction of the cylinder 41 inside the cylinder 41. As the piston 101 slides, the seal members 110 and 120 slide while being in contact with the inner surface of the cylinder 41. Accordingly, it is preferable to maintain the slidability (or slipperiness or lubricity) of the seal members 110 and 120 of the piston 101. If the slidability of the seal members 110 and 120 is maintained, the seal members 110 and 120 are prevented from wearing out. In this way, the sealing performance for the high pressure gas chamber 105 and low pressure gas chamber 106 may be maintained.

### [Piston 101]

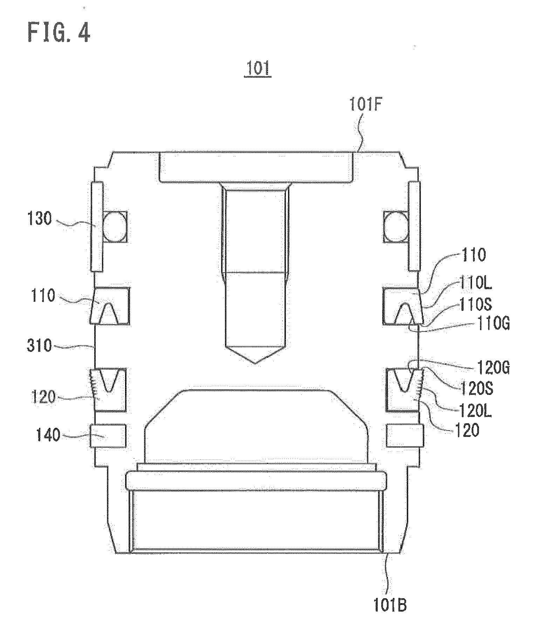

FIG. 4 is an enlarged view of the piston 101 of FIG. 3. Referring to FIG. 4, the seal member 120 is a piston ring that is attached to the outer periphery of the piston 101. The seal member 120 is annular in shape and extends in a circumferential direction of the piston 101 along its outer periphery. The seal member 120 may be made of rubber or resin such as urethane, for example.

The seal member 110 is located closer to the front face 101F of the piston 101 than the seal member 120 is. In other words, the seal member 110 is located closer to the high pressure gas chamber 105 than the seal member 120 is. Similar to the seal member 120, the seal member 110 is a piston ring that is attached to the outer periphery of the piston 101. The seal member 110 is annular in shape and extends in a circumferential direction of the piston 101 along its outer periphery. Similar to the seal member 120, the seal member 110 may be made of rubber or resin such as urethane, for example.

The seal member 120 has an outer periphery 120L, an inner periphery and a pair of surfaces. The one of the surfaces that faces the seal member 110, 120S, includes a groove 120G extending in a circumferential direction of the seal member 120. Similarly, the seal member 110 has an outer periphery 110L, an inner periphery and a pair of surfaces. The one of the surfaces that faces the seal member 120, 110S, includes a groove 110G extending in a circumferential direction of the seal member 110.

In short, the groove 110G of the seal member 110 and the groove 120G of the seal member 120 face each other. Lubricant such as grease is applied to the outer periphery of the piston 101. Lubricant can be easily kept between the seal members 110 and 120 if the grooves 110G and 120G face each other. This point will be explained below.

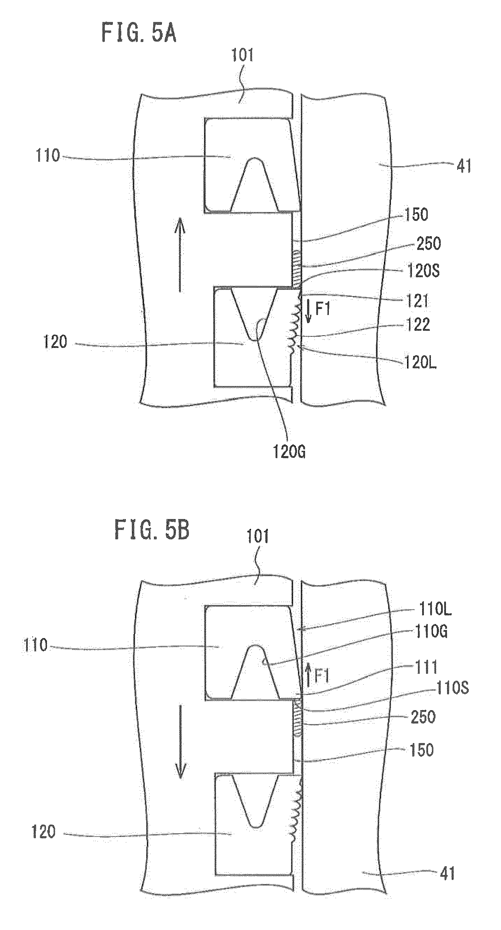

As shown in FIGS. 5A, when the piston 101 slides upward in the cylinder 41, a downward kinetic frictional force F1 acts on the portions of the outer periphery 120L of the seal member 120 that are in contact with the inner periphery of the cylinder 41, which portions will be referred to as a lip 121. In other words, the kinetic frictional force F1 is in the direction from the opening of the groove 120G toward the bottom of this groove. Thus, the kinetic frictional force F1 enlarges the groove 120G such that the lip 121 is in tighter contact with the inner surface of the cylinder 41. Thus, the lubricant 250 applied to the area of the outer periphery that is between the seal members 110 and 120, referred to as outer periphery area 150, is blocked off by the surface 120S.

As shown in FIG. 5B, when the piston 101 slides downward in the cylinder 41, an upward kinetic frictional force F1 acts on the portions of the outer periphery 110L of the seal member 110 that are in contact with the inner periphery of the cylinder 41, which portions will be referred to as a lip 111. In other words, the kinetic frictional force F1 is in the direction from the opening of the groove 110G toward the bottom of this groove. Thus, the kinetic frictional force enlarges the groove 110G such that the lip 111 is in tighter contact with the inner surface of the cylinder 41. Thus, the lubricant 250 is blocked off by the surface 110S.

In short, as the piston 101 slides, the groove 110G or 120G is enlarged such that the lip 111 or 121 is in tighter contact with the inner surface of the cylinder 41. Thus, the lubricant 250 is blocked off by the surface 110S or 120S and is more likely to remain on the outer periphery area 150 between the seal members 110 and 120. This facilitates maintaining the slidability of the seal members 110 and 120.

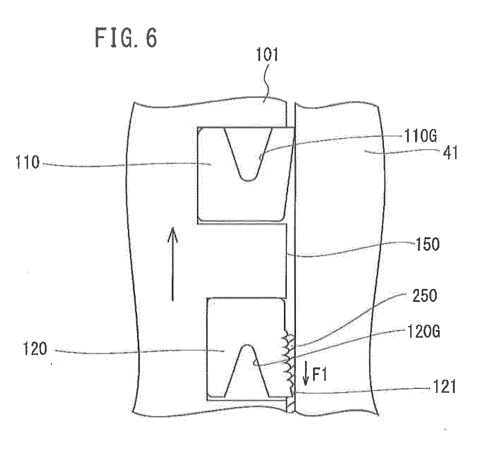

In contrast, in implementations where the grooves 110G and 120G of the seal members 110 and 120 face in different directions, as shown in FIG. 6, upward sliding of the piston 101 in the cylinder 41 produces, at the seal member 120, a kinetic frictional force F1 in the direction from the bottom of the groove 120G toward its opening. In this case, the kinetic frictional force F1 acts to close the groove 120G. As a result, the lip 121 and the inner surface of the cylinder 41 are in looser contact with each other such that the lubricant 250 may flow through the gap between the lip 121 and cylinder 41 to be downwardly leaked from the seal member 120. Similarly, downward sliding of the piston 101 in the cylinder 41 may cause the lubricant 250 to be upwardly leaked from the seal member 110. In short, in the implementation shown in FIG. 6, sliding of the piston 101 may cause the lubricant 250 in the gap between the seal members 110 and 120 to be leaked from the space along the outer periphery area 150 between the seal members 110 and 120. As such, the lubricant 250 on the outer periphery area 150 can be easily depleted, making it difficult to maintain the slidability of the seal members 110 and 120.

As discussed above, in the air shock absorber 100 of the present embodiment, the grooves 110G and 120G of the seal members 110 and 120 face each other. As such, the lubricant 250 is more likely to remain between the seal members 110 and 120, thereby facilitating maintaining the slidability of the seal members 110 and 120. Thus, the seal members 110 and 120 are less likely to wear off, thereby facilitating maintaining the sealing performance for the high pressure gas chamber 105 and low pressure gas chamber 106.

As shown in FIGS. 5A and 5B, the lip 121 of the periphery 120L of the seal member 120 includes a plurality of folds 122 extending in a circumferential direction of the cylinder and arranged in an axial direction of the cylinder. The folds have a cross-section profile with a convex arc. The folds 122 prevent the outer periphery 120L of the seal member 120 and the inner surface of the cylinder 41 from being in surface contact, and facilitate them being in line contact. This makes it possible to hermetically seal the high pressure gases located upward without causing excessive frictional resistance.

In contrast, the outer periphery 110L of the seal member 110 is flat and has an edge. In this implementation, even when the lubricant rises up, the lip 111 of the seal member 110 scrapes down the lubricant. In other words, the seal member 110 serves as an oil seal. The lip 111 of the seal member 110 only needs to be able to scrape down lubricant. Accordingly, the seal member 110 does not need to include a plurality of folds 122.

Preferably, the piston 101 may include a seal member 130, as shown in FIG. 4. The seal member 130 is located on the outer periphery of the piston 101. The seal member 130 is annular in shape and extends in a circumferential direction of the piston 101.

The seal member 130 is located closer to the high pressure gas chamber 105 than the seal member 110 is. In this implementation, the seal member 130 hermetically seals the high pressure gas chamber 105. As a result, the seal members 110 and 120 are contained in the low pressure gas chamber 106. Thus, a lower pressure acts on the seal members 110 and 120. This improves the durability of the seal members 110 and 120.

In FIG. 4, the seal member 130 is located closer to the high pressure gas chamber 105 than the seal member 110 is. Alternatively, the seal member 130 may be located between the seal members 110 and 120. In this case, too, the seal member 130 hermetically seals the high pressure gas chamber 105. This reduces the pressure acting on the seal member 120, at least. In short, the seal member 130 is suitably located closer to the high pressure gas chamber 105 than at least the seal member 120 is.

The lubricity and durability of the seal member 110 can be maintained more easily in implementations where the seal member 130 is located closer to the high pressure gas chamber 105 than the seal member 110 is than in implementations where it is located between the seal members 110 and 120. This is presumably because if the seal member 130 is located closer to the high pressure gas chamber 105 than the seal member 110 is, the seal members 110 and 120 are located closer to the low pressure gas chamber 106 than the seal member 130 is; thus, a lower pressure acts on the seal members 110 and 120 than in implementations where the seal member 130 is located between the seal members 110 and 120.

Preferably, the stiffness of the seal member 130 is higher than that of the seal members 110 and 120. Accordingly, the seal member 130 may be made of, for example, a resin that is harder than the seal members 110 and 120, or of metal. In these cases, the seal member 130 has a good durability and slidability under high pressure.

Preferably, the piston 101 further includes a ring member 140. The ring member 140 is impregnated with a lubricant. The ring member 140 may be made of, for example, a non-woven fabric such as felt. Impregnating the ring member 140 with a lubricant further improves the slidability of the piston 101. The ring member 140 may be impregnated with the lubricant 200, or with the lubricant 250. The above effect of the ring member 140 is particularly valuable when there is little lubricant 200, or when no lubricant 200 is applied at all. Since the ring member 140 is made of a non-woven fabric, it prevents contamination (impurities) from reaching the seal member 110 or 120. This improves the sealing performance of the seal members 110 and 120. The ring member 140 may be impregnated with a lubricant different from the lubricant 200 or lubricant 250.

In some implementations, the piston 101 may not include the seal member 130 and/or ring member 140. Even in these implementations, the piston 101 may hold the lubricant 250 by means of the seal members 110 and 120, thereby maintaining the slidability and sealing performance. Further improvements in the slidability and sealing performance will be achieved if the piston 101 includes the seal member 130 and/or ring member 140.

In FIG. 2, the air shock absorber 100 is included in a so-called upright front fork 40, where the cylinder 41 is located higher than the outer tube 42. Alternatively, the air shock absorber of the present embodiment may be employed in an inverted front fork 40, where the cylinder 41 is located lower than the outer tube 42.

### [Second Embodiment]

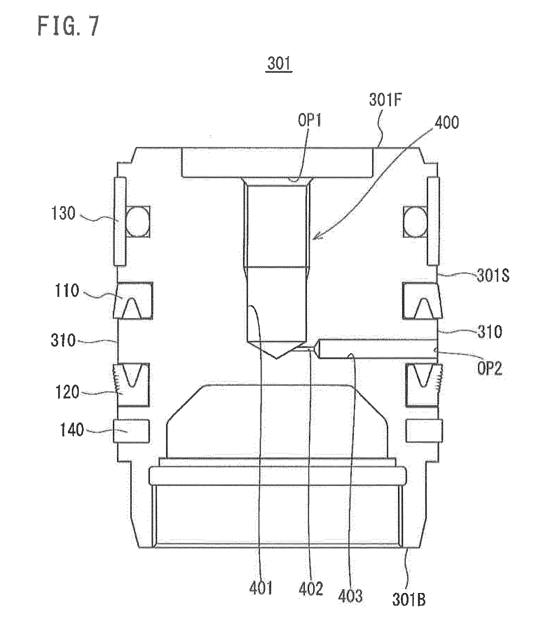

FIG. 7 is a vertical cross-sectional view of a piston 301 of a straddle-type vehicle according to a second embodiment. The components of the straddle-type vehicle of the second embodiment except the piston 301 are the same as those of the straddle-type vehicle 1 of the first embodiment.

Referring to FIG. 7, the piston 301 includes a front face 301F, back face 301B, and outer periphery 301S. The piston 301 further includes a through-hole 400, a new feature compared with the piston 101. The other structure of the piston 301 is the same as that of the piston 101.

The through-hole 400 begins at the front face 301F of the piston 301 and ends at the area of the outer periphery 301S that is between the seal members 110 and 120, i.e. outer periphery area 310. In other words, the through-hole 400 includes an opening OP1 in the front face 301F and an opening OP2 in the outer periphery area 310.

The through-hole 400 is used to supply the outer periphery area 310 with the lubricant 250. For example, during manufacture and assembly of the air shock absorber 100, the piston 301 may be inserted into the cylinder 41 and then the lubricant 250 may be supplied to the outer periphery area 310 via the through-hole 400.

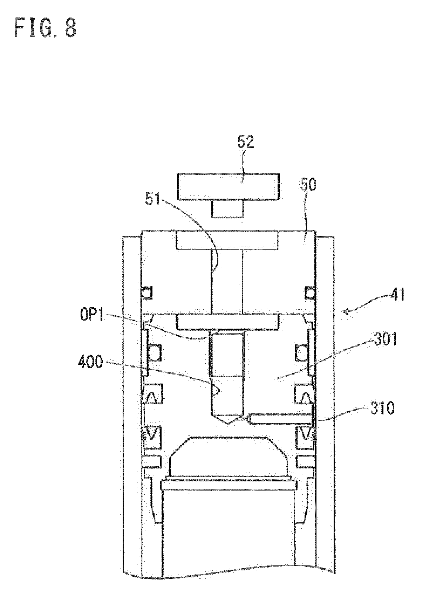

As shown in FIG. 8, an end member 50, which is a circular plate located at the top end of the cylinder 41 of the present embodiment, may include a through-hole 51 that is concentric with the opening OP1. A detachable lid 52 is attached to the through-hole 51. When the piston 301 is in contact with the lower surface of the upper end member 50 of the cylinder 41, the through-hole 51 is aligned with the through-hole 400. Then, the lubricant 250 may be supplied to the outer periphery area 310 via the through-hole 51 and then the through-hole 400.

Returning to FIG. 7, the through-hole 400 includes hole sections 401 to 403. The hole section 401 includes the opening OP1 in the front face 301F. In FIG. 7, the hole section 401 extends in an axial direction of the piston 301. The hole section 403 includes the opening OP2 in the outer periphery area 310. In FIG. 7, the hole section 403 extends in a radial direction of the piston 301.

The hole section 402 is located between the hole sections 401 and 403, and is connected with the hole sections 401 and 403. The hole section 402 has a cross-section profile that is smaller than that of the hole sections 401 and 403. In the present embodiment, each of the hole sections 401 to 403 has a circular cross-section profile. As such, the hole section 402 has a smaller inner diameter than the hole sections 401 and 403.

If the through-hole 400 had a large cross-section profile, the pressure in the high pressure gas chamber 105 would be easily transmitted to the outer periphery area 310 via the through-hole 400. In such a case, the pressure near the outer periphery area 310 might increase under the influence of the high pressure gas chamber 105.

As the hole section 402 has a smaller cross-section profile than the other hole sections 401 and 403, there are less dynamic fluctuations in the pressure near the outer periphery area 310 due to the presence of the through-hole 400. In other words, the hole section 402 blocks off the pressure in the high pressure gas chamber 105. Preferably, the hole section 402 has an inner diameter that is equal or less than 0.5 mm. In this case, there are almost no effects, near the outer periphery area 310, of dynamic fluctuations in the pressure in the high pressure gas chamber 105.

In some implementations, the hole section 403 may not be present. In these implementations, the through-hole 400 includes hole sections 401 and 402, where the hole section 402 ends at the opening OP2. In short, the through-hole 400 suitably includes a hole section 402 with a smaller cross-section profile than that of the other sections of the hole. Since the hole section 402 blocks off dynamic fluctuations in the pressure, the pressure near the outer periphery area 310 is stabilized at a level lower than that for the high pressure gas chamber.

In some implementations, the through-hole 400 may not include a hole section 402 with a smaller cross-section profile. In these implementations, too, the through-hole 400 can supply the lubricant 250 to the outer periphery area 310. However, the pressure near the outer periphery area 310 may be influenced by dynamic fluctuations in the pressure in the high pressure gas chamber 105.

In the embodiments illustrated above, the air suspension is used as a front fork. Alternatively, the air suspension may be used as the rear suspension 20 in FIG. 1. Still alternatively, the air suspension may be used as other components.

Instead of the lubricant 250, the lubricant 200 may be applied to the outer periphery area between the seal members 110 and 120 of the piston.

While embodiments of the present invention have been described, the above embodiments are merely examples that may be used to carry out the present invention. Therefore, the present invention is not limited to the above embodiments, and the above embodiments may be modified as necessary without departing from the spirit of the invention.

## Claims

1. An air shock absorber (100, 500, 600) comprising:
a cylinder (41);
a piston (101; 301) contained in the cylinder (41);
a low pressure gas chamber (106) located in the cylinder (41) adjacent a back face (101B; 301B) of the piston (101; 301);
a high pressure gas chamber (105) located in the cylinder (41) adjacent a front face (101F; 301F) of the piston (101; 301), and having a pressure higher than that in the low pressure gas chamber (106); and
a piston rod (102) connected with the back face (101B; 301B) of the piston (101; 301) and extending into the low pressure gas chamber (106),
wherein the piston (101; 301) includes:
a first seal member (120) extending in a circumferential direction of the piston (101; 301) along its outer periphery, being in contact with an inner periphery of the cylinder (41), and being annular in shape; and
a second seal member (110) located on the outer periphery of the piston (101; 301) closer to the front face (101F, 301F) of the piston (101; 301) than the first seal member (120) is, extending in a circumferential direction of the piston (101; 301) along its outer periphery, being in contact with the inner periphery of the cylinder (41), and being annular in shape,
the first seal member (120) has a first surface (120S) including a groove (120G) extending in a circumferential direction of the first seal member (120), and
the second seal member (110) has a second surface (110S) facing the first surface (120S) and including a groove (110G) extending in a circumferential direction of the second seal member (110).

2. The air shock absorber (100, 500, 600) according to claim 1, wherein the piston (101; 301) further includes a third seal member (130) located on the outer periphery of the piston (101; 301) closer to the high pressure gas chamber (105) than the first seal member (120) is, extending in a circumferential direction of the piston (101; 301), being in contact with the inner periphery of the cylinder (41), and being annular in shape.

3. The air shock absorber (100, 500, 600) according to claim 2, wherein the third seal member (130) is located closer to the high pressure gas chamber (105) than the second seal member (110) is.

4. The air shock absorber (100, 500, 600) according to claim 1, wherein the piston (301) further includes a through-hole (400) extending from the front face (301F) to an area of the outer periphery that is located between the second and first seal members (110, 120).

5. The air shock absorber (100, 500, 600) according to claim 4, wherein the through-hole (400) includes:
a first hole section (401) including an opening (OP1) in the front face (301F) of the piston (301); and
a second hole section (403) having a cross-section profile smaller than that of the first hole section (401).

6. A straddle-type vehicle (1) including the air shock absorber (100, 500, 600) according to any one of claims 1 to 5.
